# EUROPEAN PATENT APPLICATION

(11) **EP 1 132 449 A2**
(43) Date of publication of application: **12.09.2001**
(21) Application number: 01200774.6
(22) Date of filing: 01.03.2001
(51) Int. Cl.: C09K 9/02, G03C 1/73

(54) **Photochromic compounds in the solid state, process for their preparation and their use in polymeric materials**

(30) Priority: 07.03.2000 IT MI000435
(71) Applicant: Great Lakes Chemical (Europe) GmbH, 8500 Frauenfeld (CH)
(72) Inventor: Malatesta, Vincenzo, 20090 San Maurizio Al Lambro (IT); Hobley Jonathan, 980-8578 Miyagi-Ken (JP); Giroldini, William, 20097 San Donato Milanese(Milan) (IT); Wis, Maria Lucia, 20122 Milan (IT)
(74) Representative: De Gregori, Antonella

(57) **Abstract**

Photochromatic compounds in the solid state belonging to the group of chromenes and spiro-pyrans, having general formula (I):

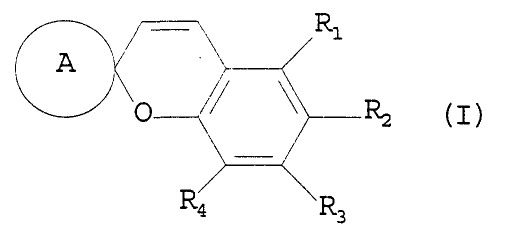

The above photochromatic compounds in the solid state are particularly useful as optical memory devices.

## Description

The present invention relates to photochromatic compounds in the solid state.

More specifically, the present invention relates to photochromatic compounds in the solid state, belonging to the group of chromenes and spiro-pyrans, a process for their preparation and their use in polymeric materials.

A further object of the present invention relates to polymeric compositions containing said photochromatic compounds in the solid state and the photochromatic articles obtained from their processing.

The present invention also relates to the use of the above photochromatic compounds for optical memory devices.

Photochromatic compounds are substances which have the characteristic of reversibly changing colour and/or degree of light transmission when exposed to solar or artificial light in the band ranging from UV to visible, or to some types of electromagnetic radiation, returning to their original state of colour and transmission when the initial light source is removed.

There are numerous substances with photochromatic characteristics, which belong to various groups of both organic and inorganic compounds such as, for example, those described in the texts "Photochromism", by G.H. Brown (Ed.), Vol. III of the Weissberger series "Techniques of Organic Chemistry", Wiley Interscience, New York (1971) and in "Photochromism: Molecules and Systems", by H. Dürr and H. Bouas-Laurent (Ed.), Vol. 40 of the series "Studies in Organic Chemistry" Elsevier (1990).

Among organic photochromatic compounds, those belonging to the groups of spiro-indolino-oxazines, spiro-pyrans and chromenes, are particularly known and used.

The above compounds are capable of giving photochromatic characteristics to polymerized organic materials used, for example, in the production of photochromatic lenses for eye-glasses, special inks, toys, and in many other applications.

As an example, the following patents can be mentioned: USA 3,562,172, USA 3,578,602, USA 4,215,010, USA 4,342,668, USA 5,055,576, USA 5, 110, 922, USA 5, 186, 867, EP 146,135, EP 134,633, EP 141,407, EP 245,020, IT 1,233,348 and IT 1,238,694.

Photochromatic compounds are generally used in solution as, in the solid state, they are not capable of changing colour and/or degree of light transmission when exposed to solar or artificial light in the band ranging from UV to visible.

The Applicant has now surprisingly found that some compounds belonging to the group of chromenes and spiro-pyrans, in the solid state, are capable of changing colour and/or degree of light transmission when exposed to solar or artificial light in the band ranging from UV to visible. These photochromatic compounds in the solid state have good photochromatic characteristics, good fatigue resistance and good colourability characteristics.

An object of the present invention therefore relates to photochromatic compounds in the solid state, belonging to the group of chromenes and spiro-pyrans, having general formula (I) : 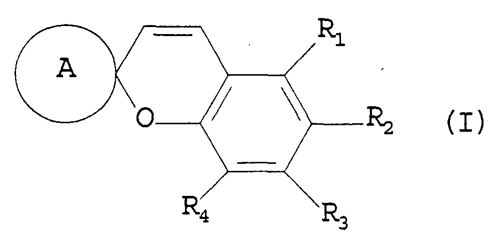 wherein:
- A represents one of the following groups having formula (II) or (III): 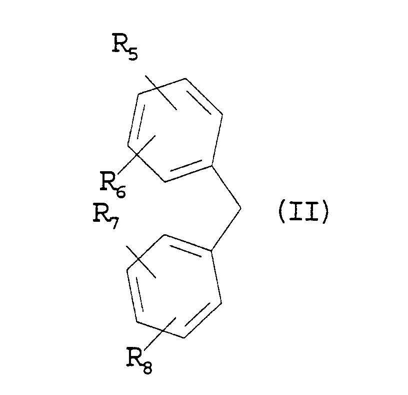 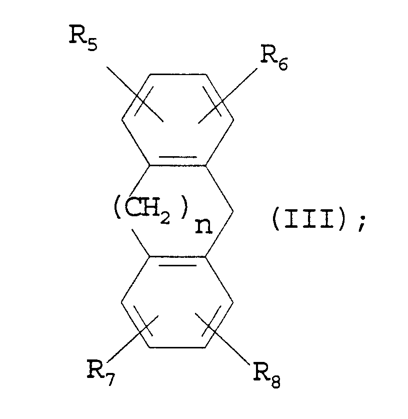
- R₁, R₂, R₃, R₄, R₅, R₆, R₇ and R₈, each independently represent a hydrogen atom; or a linear or branched C₁-C₄ alkoxyl group;
- or, R₃ and R₄ represent the condensation points with an aryl group such as, for example, phenyl;
- n is an integer number ranging from 0 to 3, extremes included.

A further object of the present invention relates to a process for the preparation of the photochromatic compounds in the solid state having general formula (I).

The photochromatic compounds in the solid state having general formula (I) object of the present invention, can be prepared by the condensation of compounds deriving from propargyl alcohol having general formula (IV), or compounds deriving from α,β-unsaturated aldehydes having general formula (VI), with hydroxy-aryl compounds having general formula (V), as indicated in the following schemes: 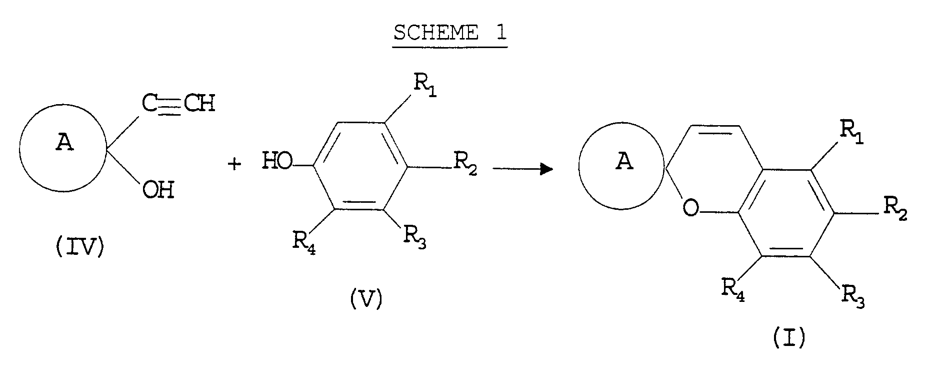 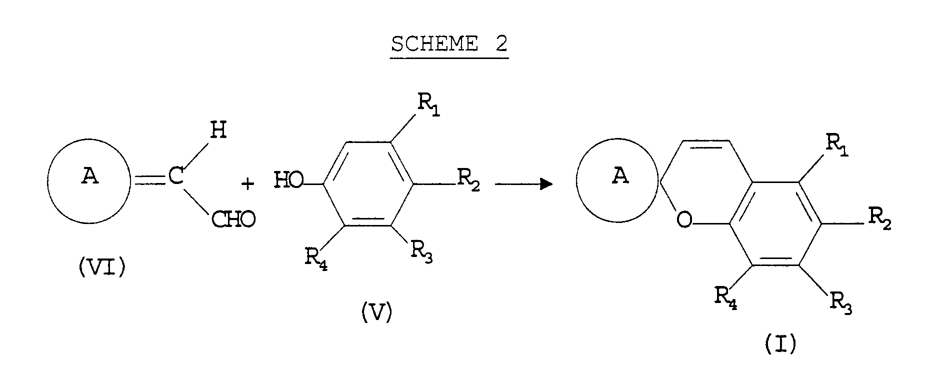 wherein A, R₁, R₂, R₃ and R₄ have the same meanings described above.

Said condensation reaction is carried out in the presence of an inert organic solvent such as, for example, ethyl alcohol, isopropanol, dioxane, toluene, acetonitrile, acetone, acetic acid or a mixture of said solvents.

In the case of Scheme 1, an acid is used as catalyst, such as for example, sulfuric acid, p-toluene-sulfonic acid, trifluoroacetic acid, phosphoric acid, or an acid alumina, or an acid polymer such as, for example, sulfonated polystyrene, etc.; and the condensation reaction is carried out at a temperature ranging from 20°C to 100°C, preferably from 50°C to 80°C, for a time ranging from 1 hour to 20 hours, preferably from 2 hours to 6 hours. The acid catalyst is used in a quantity ranging from 1% to 5%.

In the case of Scheme 2, an organic base is used as catalyst, such as for example, triethylamine, N-methyl-morpholine, etc., or a metal complex such as, for example, titanium(IV)tetra-ethoxide, etc., and the condensation reaction is carried out at a temperature ranging from 50°C to 100°C, preferably from 60°C to 75°C, for a time ranging from 1 hour to 10 hours, preferably from 2 hours to 3 hours. When an organic base is used as catalyst, said catalyst is used in a quantity ranging from 10% to 30%; when a metal complex is used as catalyst, said catalyst is used in a quantity which is at least stoichiometric with the reagents, or in a higher quantity than the reagents.

The reaction product thus obtained is generally purified by means of elution on a silica column and subsequent crystallization from a solvent such as, for example, acetone, toluene, hexane, heptane, dichloromethane, ethyl acetate, etc., or a mixture of said solvents.

The compounds deriving from propargyl alcohol having general formula (IV) can be prepared by the reaction of ketone compounds with sodium acetylide in xylene or with a lithium acetylide/ethylenediamine complex as described, for example, in U.S. patent 5,585,042 and 5,238,981.

The compounds deriving from α,β-unsaturated aldehydes having general formula (VI) can be prepared according to processes known in the art as described, for example, in Japanese patent application JP 48/016481; or in "Organic Synthesis" (1970), Vol. 50, page 66.

The hydroxy-aryl compounds having general formula (V) are usually products which are commercially available such as, for example, α-naphthol and β-naphthol, 4-methoxy-1-naphthol, or 3,4-dimethoxyphenol.

Specific examples of photochromatic compounds in the solid state having general formula (I), object of the present invention, but which do not limit the scope of the invention itself are:
- Compound having formula (Ia): 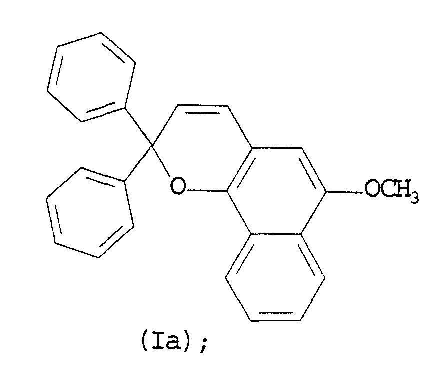
- Compound having formula (Ib) : 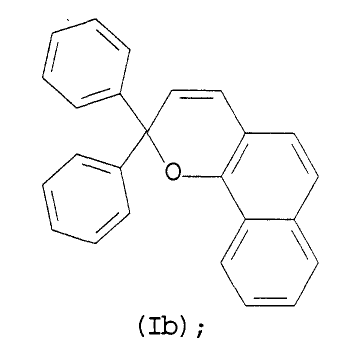
- Compound having formula (Ic):

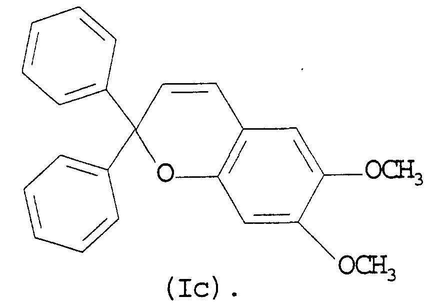

The photochromatic compounds in the solid state having general formula (I), object of the present invention, are colourless or slightly yellow or pink-coloured crystalline products.

The above compounds, if exposed to a light source, either visible or ultraviolet, become yellow or yellow-orange or reddish-coloured. This colouring lasts for days at room temperature if the coloured crystals are protected from ultraviolet radiation and intense visible light sources. Prolonged exposure to visible light makes the activated crystals fade until the typical, slightly yellow or pink, colouring of the crystals before activation, is obtained. Furthermore, when the compound having formula (Ia) in the solid state is exposed to an ultraviolet light source, it becomes yellow/orange-coloured with a maximum at 500 nm and this coloured form emits fluorescence with a maximum at 630 nm.
The photochromatic compounds in the solid state having general formula (I) can be applied to the surface or incorporated in mass, in the solid state, into the desired articles, using techniques already known in the art and described hereunder.

Some polymeric photochromatic end-articles can be obtained with moulding techniques such as, for example, injection or compression moulding, starting from polymers in which one or more of the photochromatic compounds in the solid state having formula (I) are homogeneously dispersed in mass.

Alternatively, the photochromatic compounds in the solid state having general formula (I) can be dissolved in a solvent, together with the polymeric material such as, for example, polymethyl methacrylate, polyvinyl alcohol, polyvinyl butyral, cellulose acetate butyrate or epoxy, polysiloxane, urethane resin. The mixture thus obtained is deposited on a transparent base to form, after evaporation of the solvent, a photochromatic coating.

The photochromatic compounds in the solid state having general formula (I) can also be added to a polymerizable monomer such as, for example, a meth(acrylic) or allyl carbonate monomer, so that, after polymerization carried out in the presence of a suitable initiator such as, for example, azo-bis (isobutyronitrile) in the case of the meth(acrylic) monomer, or a peroxyketal in the case of the allyl carbonate monomer, they are uniformly incorporated in the resin formed.

Finally, the photochromatic compounds in the solid state having general formula (I) can be applied to a transparent substrate such as, for example, polycarbonate, polymethyl methacrylate or polydiethyleneglycol bis(allyl carbonate), by means of surface impregnation obtained by putting the substrate in contact, at a suitable temperature, with a solution or dispersion in the solid state, containing one or more of the photochromatic compounds in the solid state having general formula (I), operating according to a method described, for example, in U.S. patent 5,130,353.

The photochromatic compounds in the solid state having general formula (I), object of the present invention, have the characteristic of being able to be incorporated in mass, or using one of the techniques described above, into various organic polymers such as, for example, high density polyethylene (HDPE), low density polyethylene (LDPE), ethylene-vinylacetate copolymer, polyether amides, polypropylene, polymethyl methacrylate, polyvinyl alcohol, polyvinyl butyral, cellulose acetate butyrate, epoxy, polysiloxane or urethane resins, polycarbonate, polydiethylene glycol bis(allyl carbonate), polyamides, polyesters, polystyrene, polyvinylchloride, polyethylacrylate, siliconic polymers.

A further object of the present invention therefore relates to polymeric compositions comprising the above polymeric materials and one or more of the above photochromatic compounds in the solid state having general formula (I) and the photochromatic articles obtained from their processing.

As already mentioned above, the photochromatic compounds in the solid state having general formula (I), when exposed to an ultraviolet light source, emit fluorescence with a maximum at 630 nm: this characteristics makes them particularly useful for the non-destructive reading of optical memory devices. A further object of the present invention therefore relates to the use of the photochromatic compounds in the solid state having general formula (I) for optical memory devices (for example, optic disks, etc.).

The photochromatic compounds in the solid state having general formula (I), object of the present invention, are added to the above polymeric compositions in a quantity ranging from 0.01% to 5% by weight, preferably between 0.1% and 2% by weight, with respect to the weight of said polymeric compositions.

The photochromatic compounds in the solid state having general formula (I), object of the present invention, can also be added to coating compositions, such as for example, paints, lacquers, paints or lacquers based on hybrid polysiloxanes and/or silica gel, compositions based on plastic materials.

A further object of the present invention therefore relates to coating compositions, such as for example, paints, lacquers, paints or lacquers based on hybrid polysiloxanes and/or silica gel, compositions based on plastic materials, comprising one or more of said photochromatic compounds in the solid state.

The photochromatic compounds in the solid state having general formula (I), object of the present invention, are added to the above coating compositions in a quantity ranging from 0.01% to 5% by weight, preferably between 0.1% and 2% by weight, with respect to the weight of said coating compositions.

Paints or lacquers based on hybrid polysiloxanes and/or silica gel are obtained by means of the "sol-gel" process described, for example, by M. Nogami, Y. Abe in: "Journal of Materials Science" (1995), Vol. 30, pages 5789-5792.

The above coating compositions can be applied to the substrate (metal, plastic, wood, etc.) using the conventional methods such as, for example, brushing, spraying, pouring, dipping or electrophoresis.

The photochromatic compounds in the solid state having general formula (I), object of the present invention, can optionally be used in the presence of the usual additives for organic polymers such as, for example, phenolic antioxidants, sterically hindered amines, benzotriazoles, benzophenones, phosphites or phosphonites, etc.

Some illustrative examples are provided for a better understanding of the present invention and for its embodiment but should in no way be considered as limiting the scope of the invention itself.

### EXAMPLE 1

### Preparation of the compound having formula (Ia) :

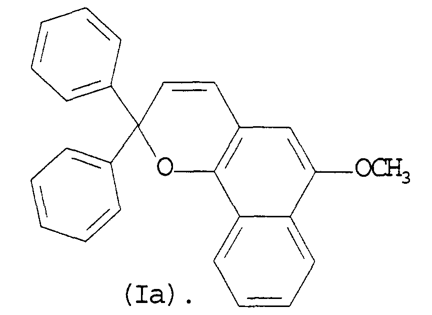

4.13 g of β-phenyl-cinnamaldehyde, 3.45 g of 4-methoxy-1-naphthol, 10 ml of toluene and 6.8 g of titanium(IV)tetra-ethoxide are charged into a 50 ml flask, equipped with a reflux cooler and magnetic stirrer. The mixture is heated, in a nitrogen atmosphere, to 100°C, for 6 hours.

The reaction raw product obtained is cooled to 40°C, and 100 ml of toluene, 10 ml of water and 5 g of silica are added: the mixture is heated to 80°C for 30 minutes. An abundant precipitate of titanium-hydroxide is formed.

At the end of the reaction, the mixture is filtered obtaining a solution consisting of an aqueous phase and an organic phase. The organic phase is separated, concentrated and the raw product thus obtained is purified by elution on a silica column, using a toluene/heptane mixture (80/20) and is finally recrystallized from heptane, obtaining 3.3 g of a yellowish crystalline product corresponding to the photochromatic Compound having formula (Ia).

The above compound is identified by means of gas-mass (molecular weight = 364) and NMR spectrum.
¹H-NMR (200 MHz, CDCl₃-TMS) δ (ppm) : 8.34 (doublet, 1H; J = 8.4 Hz); 8.15 (doublet, 1H; J = 8.4 Hz); 7.54 (doublet, 4H); 7.32 (triplet, 4H); 7.4-7.1 (4H aromatics); 6.72 (doublet, 1H; J = 9.6 Hz); 6.24 (doublet, 1H; J = 9.6 Hz); 6.52 (1H) ; 3.93 (3H).

### EXAMPLE 2

### Preparation of the compound having formula (Ib) :

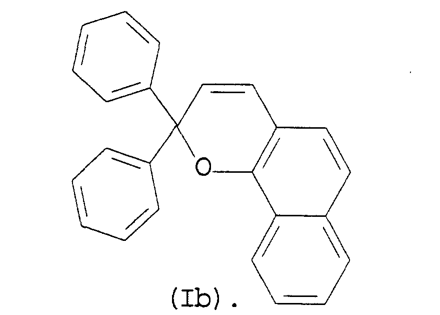

4.13 g of β-phenyl-cinnamaldehyde, 3.2 g of α-naphthol, 10 ml of toluene and 6.8 g of titanium(IV)tetra-ethoxide are charged into a 50 ml flask, equipped with a reflux cooler and magnetic stirrer. The mixture is heated, in a nitrogen atmosphere, to 100°C, for 6 hours.

The reaction raw product obtained is cooled to 40°C, and 100 ml of toluene, 10 ml of water and 5 g of silica are added: the mixture is heated to 80°C for 30 minutes. An abundant precipitate of titanium-hydroxide is formed.

At the end of the reaction, the mixture is filtered obtaining a solution consisting of an aqueous phase and an organic phase. The organic phase is separated, concentrated and the raw product thus obtained is purified by elution on a silica column, using a toluene/heptane mixture (80/20) and is finally recrystallized from heptane, obtaining 1.2 g of a pink crystalline product corresponding to the photochromatic compound having formula (Ib).

The above compound is identified by means of gas-mass (molecular weight = 334) and NMR spectrum.
¹H-NMR (200 MHz, CDCl₃-TMS) δ (ppm) : 8.39 (doublet, 1H; J = 8 Hz); 7.74 (doublet, 1H; J = 8 Hz); 7.55 (doublet, 4H; J = 8 Hz); 7.47 (multiplet, 2H); 7.40-7.22 (6H); 7.18 (doublet, 1H; J = 7.2 Hz); 6.77 (doublet, 1H; J = 9.6 Hz); 6.22 (doublet, 1H; J = 9.6 Hz).

### EXAMPLE 3

### Preparation of the compound having formula (Ic):

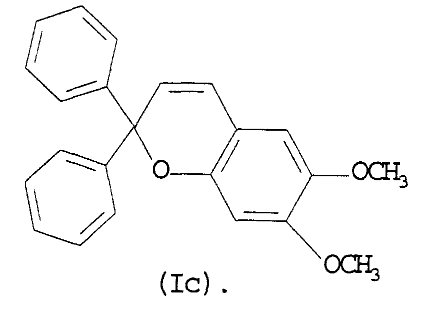

4.20 g of β-phenyl-cinnamaldehyde, 3.1 g of 3,4-dimethoxyphenol, 10 ml of toluene and 6.8 g of titanium(IV)tetra-ethoxide are charged into a 50 ml flask, equipped with a reflux cooler and magnetic stirrer. The mixture is heated, in a nitrogen atmosphere, to 100°C, for 6 hours.

The reaction raw product obtained is cooled to 40°C, and 100 ml of toluene, 10 ml of water and 5 g of silica are added: the mixture is heated to 80°C for 30 minutes. An abundant precipitate of titanium-hydroxide is formed.

At the end of the reaction, the mixture is filtered obtaining a solution consisting of an aqueous phase and an organic phase. The organic phase is separated, concentrated and the raw product thus obtained is purified by elution on a silica column, using a heptane/ethyl acetate mixture (80/20) and is finally recrystallized from heptane, obtaining 1.2 g of a yellowish crystalline product corresponding to the photochromatic compound having formula (Ic).

The above compound is identified by means of gas-mass (molecular weight = 344) and NMR spectrum.
¹H-NMR (200 MHz, CDCl₃-TMS) δ (ppm) : 7.44 (doublet, 4H; J = 8.4 Hz); 7.33 (triplet, 4H; J = 8.4 Hz); 7.27 (multi-plet, 2H); 6.55 (2H); 6.55 (doublet, 1H; J = 10 Hz); 6.04 (doublet, 1H; J = 10 Hz); 3.85 (3H); 3.81 (3H).

### EXAMPLE 4

### Evaluation of the photochromatic activity

The photochromatic activity of the solid photochromatic Compounds (Ia)-(Ic) obtained as described in Examples 1-3, is evaluated at room temperature.

The above photochromatic Compounds (Ia)-(Ic) are finely ground and compressed on a metal base obtaining a tablet having a diameter of 2.5 cm. The tablet is placed in the sample-holder of an integrator-sphere (LABSPHERE RSA-HP-84) and the diffused reflectance spectrum of the activated and deactivated form is registered with a Hewlett-Packard HP8452 UV-Visible spectrophotometer with a diode battery. The activation is carried out using a fluorescence ultraviolet lamp having a maximum emission centered at 320 nm. The diffused reflectance spectra are then converted into absorption spectra using the Goubelka-Mulk equation and the absorption maxima (λₘₐₓ) are indicated in Table 1. Prolonged exposure of the activated sample to tungsten light inside the integrator sphere causes fading of the activated form and a progressive decrease in the intensity of the diffused reflectance spectrum. Table 1 also specifies the fluorescence emission in the case of the Compound having formula (Ia) which, as described above, emits fluorescence with a maximum at 630 nm: the fluorescence spectrum is measured using a Shimadzu RF-5300 PC spectrofluorimeter.

**TABLE 1**

| COMPOUND | λₘₐₓ (nm) | Fluorescence emission (nm) |
|---|---|---|
| (Ia) | 500 | 630 |
| (Ib) | 495 | - |
| (Ic) | 500 | - |

## Claims

1. Photochromatic compounds in the solid state, belonging to the group of chromenes and spiro-pyrans, having general formula (I): 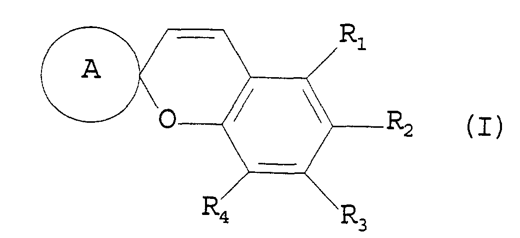 wherein:
- A represents one of the following groups having formula (II) or (III) : 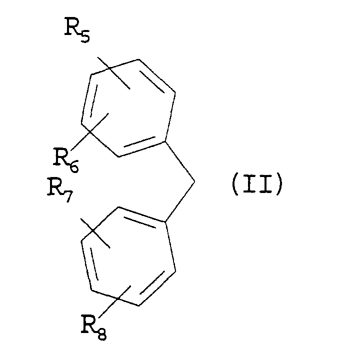 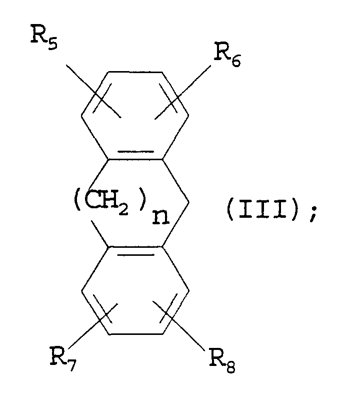
- R₁, R₂, R₃, R₄, R₅, R₆, R₇ and R₈, each independently represent a hydrogen atom; or a linear or branched C₁-C₄ alkoxyl group;
- or, R₃ and R₄ represent the condensation points with an aryl group such as, for example, phenyl;
- n is an integer ranging from 0 to 3, extremes included.

2. A photochromatic compound in the solid state according to claim 1, consisting of the compound having formula (Ia):

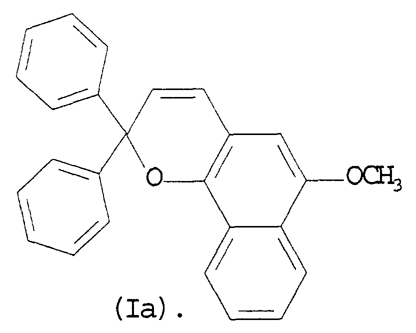

3. A photochromatic compound in the solid state according to claim 1, consisting of the compound having formula (Ib):

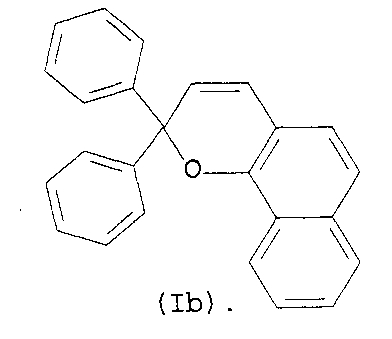

4. A photochromatic compound in the solid state according to claim 1, consisting of the compound having formula (Ic):

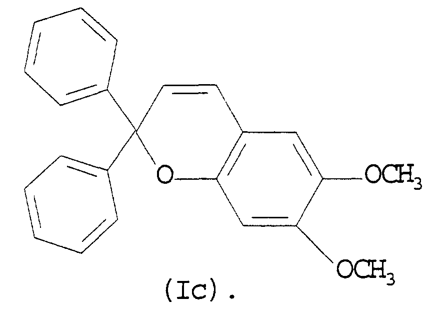

5. A process for the preparation of the photochromatic compounds in the solid state according to any of the previous claims, comprising the condensation of compounds deriving from propargyl alcohol having general formula (IV), or compounds deriving from α,β-unsaturated aldehydes having general formula (VI), with hydroxy-aryl compounds having general formula (V), as indicated in the following schemes: 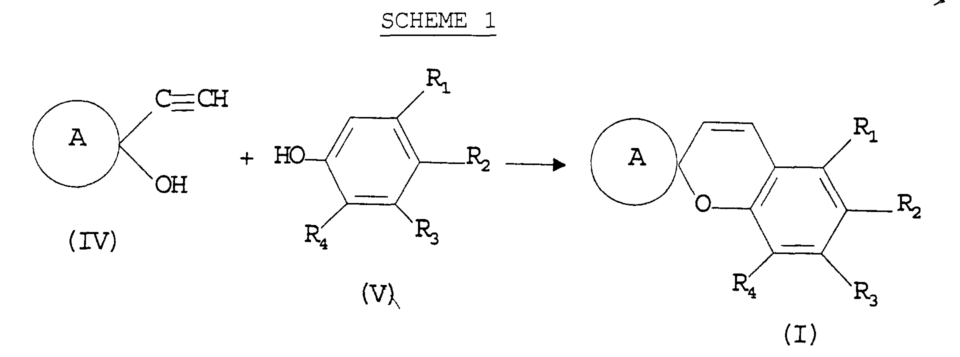 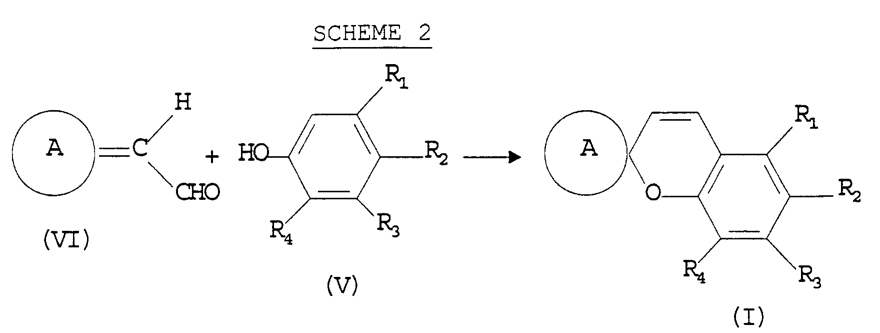 wherein A, R₁, R₂, R₃ and R₄ have the same meanings described above.

6. The process according to claim 5, wherein the condensation reaction is carried out in the presence of an inert organic solvent, or a mixture of said solvents.

7. The process according to claim 5 or 6, wherein, in the case of Scheme 1, an acid, or an acid alumina, or an acid polymer, is used as catalyst and the condensation reaction is carried out at a temperature ranging from 20°C to 100°C, for a time ranging from 1 hour to 20 hours, and the catalyst is used in a quantity ranging from 1% to 5%.

8. The process according to claim 5 or 6, wherein, in the case of Scheme 2, an organic base, or a metal complex, is used as catalyst and the condensation reaction is carried out at a temperature ranging from 50°C to 100°C, for a time ranging from 1 hour to 10 hours.

9. The process according to claim 8, wherein, when an organic base is used as catalyst, said catalyst is used in a quantity ranging from 10% to 30%; when a metal complex is used as catalyst, said catalyst is used in a quantity which is at least stoichiometric with the reagents, or in a higher quantity than the reagents.

10. Polymeric compositions comprising at least one photochromatic compound in the solid state according to any of the claims from 1 to 9, and at least one organic polymer selected from high density polyethylene, low density polyethylene, ethylene-vinylacetate copolymer, polyether amides, polypropylene, polymethyl methacrylate, polyvinyl alcohol, polyvinyl butyral, cellulose acetate butyrate, epoxy, polysiloxane or urethane resins, polycarbonate, polydiethylene glycol bis(allyl carbonate), polyamides, polyesters, polystyrene, polyvinylchloride, polyethylacrylate, siliconic polymers.

11. Coating compositions, such as paints, lacquers, paints or lacquers based on hybrid polysiloxanes and/or silica gel, compositions based on plastic materials, comprising one or more photochromatic compounds in the solid state according to any of the claims from 1 to 9.

12. The compositions according to claim 10 or 11, comprising additives for organic polymers selected from phenolic antioxidants, sterically hindered amines, benzotriazoles, benzophenones, phosphites or phosphonites.

13. Photochromatic articles obtained from the processing of the compositions according to claims 10, 11 or 12.

14. Use of the photochromatic compounds in the solid state having general formula (I), according to any of the claims from 1 to 9, for optical memory devices.
